(19) Europäisches Patentamt
European Patent Office
Office européen des brevets

(11) EP 1 215 897 A2

(12) EUROPEAN PATENT APPLICATION

(43) Date of publication:
19.06.2002 Bulletin 2002/25

(51) Int Cl.[7]: H04N 5/445

(21) Application number: 01310436.9

(22) Date of filing: 13.12.2001

(84) Designated Contracting States:
AT BE CH CY DE DK ES FI FR GB GR IE IT LI LU MC NL PT SE TR
Designated Extension States:
AL LT LV MK RO SI

(30) Priority: 15.12.2000 JP 2000382005

(71) Applicant: CANON KABUSHIKI KAISHA
Tokyo (JP)

(72) Inventor: Ono, Kenichiro,
Canon Kabushiki Kaisha
Tokyo (JP)

(74) Representative:
Beresford, Keith Denis Lewis et al
Beresford & Co.,
2-5 Warwick Court,
High Holborn
London WC1R 5DJ (GB)

# (54) Display control for a monitor

(57) The invention is to provide a display control apparatus, a display control method, a display system and a memory medium enabling to automatically realize easily observable display effectively utilizing the display area of a monitor, without any cumbersome operation. The display control apparatus of the invention learns the display resolution of a television monitor 21 based on the voltage level of a line 1 in the image terminal 7 of the television monitor 21, and causes the television monitor 21 to display an EPG (electronic program guide) matching such resolution. In case the resolution is 480 lines in the vertical direction, "program name only" is selected as the display item and a small font is selected. In case the resolution is 720 lines in the vertical direction, "program name" and "program content explanation" are selected and a small font is selected. In case the resolution is 1080 lines in the vertical direction, "program name" and "program content explanation" are selected as the display item and a large font is selected.

FIG. 1

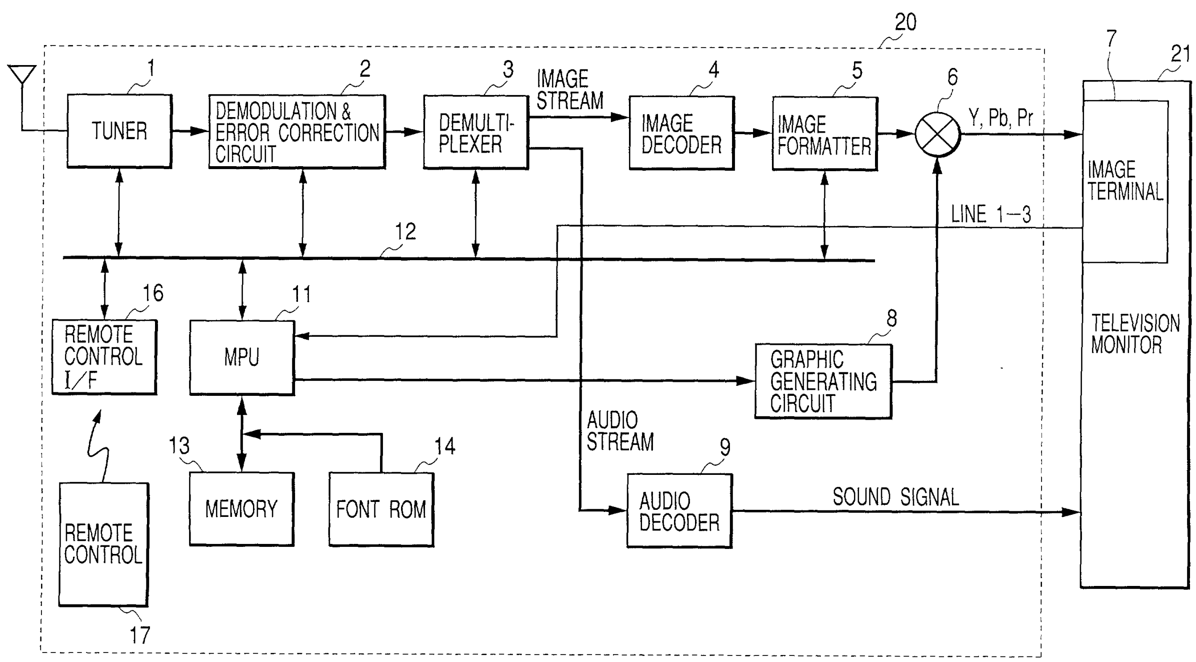




Printed by Jouve, 75001 PARIS (FR)

## Description

### BACKGROUND OF THE INVENTION

#### Field of the Invention

The present invention relates to a display control apparatus such as a television tuner connectable to a display monitor such as a television monitor for executing display thereon, a display control method therefor, a display system and a memory (storage) medium therefor.

#### Related Background Art

There is already known a display control apparatus of set top box type, such as a television tuner, adapted to be connected to a display monitor such as a television monitor for executing display thereon.

For example the Japanese Patent Application Laid-Open No. 11-164201 discloses a display control apparatus constructed as a television tuner serving as a program guide output apparatus of set top box type separated from the image monitor, and outputting character data of a program guide based on received digital broadcasting data to the monitor. In such apparatus, the information amount and the font of the character data are modified according to the image size of the image monitor or the display area size thereof, thus enabling easy observation of the program guide and the characters regardless of the size of the image or display area.

Such conventional display control apparatus, however, has been associated with a drawback of requiring cumbersome input operations, since the image size etc. of the image monitor have to be recognized and entered by the user.

Also the displayable size, display resolution, scanning method and aspect ratio of the monitor may be varied as in the case of receiving and displaying digital broadcasting, and the display control apparatus is incapable of appropriate display without changing the setting therein but the resetting of the apparatus at each change is cumbersome for the user.

### SUMMARY OF THE INVENTION

In consideration of the foregoing, a concern of the present invention is to resolve the aforementioned drawbacks and to provide a display control apparatus, a display control method, a display system and a memory medium therefor, capable of automatically providing easily observable display, effectively utilizing the displayable area of the monitor without requiring cumbersome operations.

An aspect of the present invention provides a display control apparatus connectable to a monitor, comprising:

input means for entering monitor information outputted from the monitor and related to the display function of the monitor;
generation means for generating display data of the monitor according to the monitor information entered by the input means; and
display control means for outputting the display data, generated by the generation means, to the monitor for display thereon.

Other advantages of the present invention, and the features thereof, will become fully apparent from the following detailed description of the embodiments of the present invention, with reference to the accompanying drawings.

### BRIEF DESCRIPTION OF THE DRAWINGS

Fig. 1 is a block diagram showing the configuration of a display system including a display control apparatus constituting a first embodiment of the present invention;
Fig. 2 is a table showing combinations of lines of the image terminal and voltage levels;
Fig. 3 is an external view showing the configuration of a remote controller;
Fig. 4 is a view showing the configuration of EIT;
Fig. 5 is a flow chart showing an EPG display process in the aforementioned embodiment;
Figs. 6, 7 and 8 are views showing examples of EPG display;
Fig. 9 is a flow chart showing an EPG display process in a second embodiment of the present invention;
Figs. 10 and 11 are views showing examples of EPG display;
Fig. 12 is a flow chart showing an EPG display process in a third embodiment of the present invention;
Fig. 13 is a view showing an example of EPG display;
Fig. 14 is a flow chart showing an EPG display process in a fourth embodiment of the present invention;
Fig. 15 is a view showing an example of EPG display;
Fig. 16 is a block diagram showing the configuration of a display system including a display control apparatus constituting a fifth embodiment of the present invention;
Fig. 17 is a view showing an example of bit arrangement of serial information on a monitor of the fifth embodiment of the present invention; and
Fig. 18 is a flow chart for monitor information transfer in the fifth embodiment of the present invention.

DETAILED DESCRIPTION OF THE PREFERRED EMBODIMENTS

Now the present invention will be clarified in detail by embodiments thereof, with reference to the accompanying drawings.

(First embodiment)

Fig. 1 is a block diagram showing the configuration of a display system including a display control apparatus constituting a first embodiment of the present invention. The present display system is composed by connecting a television tuner 20 constituting the display control apparatus with a television monitor 21 with an image terminal, and adding a remote controller 17 to be explained later. The television tuner 20 can be separated from the television monitor 21.

In the present embodiment, the broadcasting system is assumed as a digital broadcasting system based on "STD-B10" of ARIB (Association of Radio Industries and Businesses), and the image is transmitted according to the MPEG2 based on ISO/IEC 61818-2 while the sound is transmitted according to the MPEG2 based on ISO/IEC 61818-3.

The television tuner 20 is a tuner of so-called set top box type, connectable by an image terminal 7 to the television monitor 21 and capable of receiving the digital broadcasting.

There are also shown an MPU 11 for controlling the entire television tuner 20 and a common bus 12 for connecting the MPU 11 with various components such as a control circuit. The MPU 11 is connected to a work memory 13 and a font ROM 14 storing plural fonts of different font sizes. An image terminal 7 has lines 1, 2, 3, and the television monitor 21 can select combinations of the signal levels in these lines 1, 2, 3 to inform the MPU 11 of the resolution and scanning method representing the highest display ability of the television monitor 21 and the aspect ratio thereof.

The display ability of the television monitor 21 represented by the resolution and scanning method, in the combination of the number of the effective scanning lines and the progressive/interlaced scanning method, is represented in the following decreasing order:

1080p > 720p > 1080i > 480p > 480i

wherein, for example, 1080p means the progressive method with 1080 effective scanning lines and 480i means the interlaced method with 480 effective scanning lines.

For example, in case the television monitor 21 is capable of displaying image formats of 1080i, 480p and 480i, the MPU 11 receives the information that the highest display ability is the interlaced scanning method with 1080 effective scanning lines, namely resolutions in the vertical direction.

The image terminal 7 also includes a circuit for receiving component color difference image signals Y/pb/pr from the television tuner 20 and a circuit for generating voltage levels as shown in Fig. 2 on the three signal lines 1 to 3 according to the display resolution, scanning method and aspect ratio of the television monitor 21.

Fig. 2 shows the combinations of the lines of the image terminal and the voltage levels. For example, for a television monitor 21 having a display resolution of 720 lines, a progressive scanning method and an aspect ratio of 16:9, the image terminal 7 generates voltage levels of 2.2 V, 5 V and 5 V respectively for the signal lines 1, 2 and 3. Thus the image terminal 7 can inform, by the combinations shown in Fig. 2, other equipment of the resolution, scanning method and aspect ratio of the display by the monitor.

In the present embodiment, the three signals of the lines 1 to 3 of the image terminal 7 are supplied to the MPU 11 which, judging the voltage levels of the three signals, can known the display resolution, scanning method and aspect ratio corresponding to the television monitor 21.

Referring again to Fig. 1, a tuner unit 1 receives the digital broadcasting wave and selects a desired frequency according to the instruction of the MPU 11. The signal from the tuner unit 1 is demodulated by a demodulation/error correction circuit 2 and also subjected to detection and correction of an error generated in the communication path. The signal from the demodulation/error correction circuit 2 is supplied to a demultiplexer 3, which obtains the multiplexed program number, PID value and stream type from the PAT (program association table) and PMT (program map table) in the PSI (program specific information). Then the demultiplexer 3 selects a program containing a desired image stream and a desired audio stream and outputs these stream signals. Such operation is controlled by the supply of a control signal generated in the MPU 11 through the bus 12.

The image stream signal outputted from the demultiplexer 3 is converted by decoding in an image decoder 4 from an MPEG2 image signal into non-compressed image data, then converted by an image formatter 5 into an output format designated by the MPU 11 and outputted to a synthesis circuit 6. A graphic generation circuit 8 generates graphic data based on the original base data prepared by the MPU 11 and outputs the graphic data to the synthesis circuit 6. The synthesis circuit 6 synthesizes the output from the image formatter 5 and the graphic data from the graphic generation circuit 8, thereby outputting color difference image signals Y/pb/pr to the image terminal 7.

On the other hand, the audio stream signal outputted from the demultiplexer 3 is decoded by an audio decoder 9 from the MPEG2 audio signal into an audio signal which is outputted to the television monitor 2.

A remote controller I/F (interface) 16 detects the infrared light from the remote controller 17 and transmits the obtained data to the MPU 11 through the common bus 12. The remote controller 17 is capable of instructing, for example, on/off operation of the power supply, switching of the received channel, and display of an EPG (electronic program guide), and the user can operate the television tuner 20 by the remote controller 17.

Fig. 3 is an external view showing the configuration of the remote controller 17.

In Fig. 3 there are shown an infrared light-emitting unit 171, and keys 172 to 177, 181 to 184, and, when each of these keys is depressed, the infrared light-emitting unit 171 emits light to transmit a code corresponding to each key.

There are also provided a power supply key 172 for turning on/off the power supply, a determination key 173, a cursor rightward key 174, a cursor downward key 175, a cursor leftward key 176, a cursor upward key 177, an EPG key 181 for displaying the EPG, a menu key 182 for display for setting receiving conditions, a return key 183 and numeral keys 184 for channel setting. The method of use of these keys will be explained later in more detail.

At first there will be explained processes other than those for the image and audio data of the digital broadcasting.

The transmission path of the network constituted by the broadcasting wave is composed of plural TS (transport streams), and a packet constituting the TS is composed of a TS header and a TS payload (image, sound and additional data). The TS can be classified by the PID, and the TS payloads having a same PID can be combined to construct PES data (packetized elementary stream data). The PES data are composed of image and audio data of a program and are converted by the aforementioned decoder into image and audio signals. Information on the program is called a section and has a structure same as that of the PES. Thus the section is composed of a section header and section data.

The section data further include data complexes called descriptors of plural kinds, among which included are data called PAT and indicating the PID information of the PMT, data called PMT on the channel under current broadcasting, data called SDT (service description table) and indicating the channel name etc., and data called EIT (event information table) and indicating the program to be broadcasted.

Fig. 4 is a schematic view showing the configuration of EIT.

The EIT has a fixed PID = 0X0012, and an EIT section includes a table-id and a channel number. Then there are included a program number, a starting time, a broadcasting duration, a program name and an explanation of content of the program by the number of the programs. According to the ARIB standard "STD-B10", the "EIT of the current and next programs of the own stream" of table-id = 0x4E is broadcasted at least once in every two seconds, and the "EIT of the current and next programs of other streams" of table-id = 0x4F is broadcasted at least once in every 10 seconds. The EPG is displayed by the television tuner by receiving the channel name in the SDT and the data of the channel number, start time, program name and program content explanation in the EIT and by converting these data into a table format corresponding to the lapse of time.

In the following there will be explained the control process in case of EPG display.

Fig. 5 is a flow chart showing the EPG display process in the present embodiment.

At first the SDT and EIT sections are extracted and are stored (step S101). More specifically, in order to achieve immediate display in response to an instruction for the EPG display, the MPU 11 extracts in advance, from the demultiplexer 3, the table-id = 0x42 and the "service data of own and other streams" in the SDT of the table-id = 0x46 at PID = 0X0011 and the table-id = 0x4E and the "current and next program data of own and other streams" in the EIT of the table-id = 0x4F at PID = 0X0012, and stores these data in the memory 13.

The "service data of other streams" and "current and next programs of other streams" are also extracted and stored in the memory in order to display, in the program table, not only the data of the "own stream" but also those of other channels on the network.

Then, when the PEG key 181 of the remote controller 17 is depressed to instruct the EPG display, the MPU 11 learns such instruction through the remote controller I/F 16 (step S102) and reads the SDT and EIT data fetched in advance from the memory 13 (step S103).

Then the MPU 11 reads the voltage level of the line 1 in the image terminal 7, thereby obtaining the display resolution available in the connected television monitor 21 (step S104). In the present embodiment, there will be explained the EPG display on a television monitor capable of displaying the image format in the progressive method with an aspect ratio of 16:9 with the resolution of 480, 720 or 1080 lines in the vertical direction.

Then there is discriminated whether the number of scanning lines in the vertical direction is 480 (step S105). If affirmative, the sequence proceeds to a step S106, but, if not, there is discriminated whether the number of scanning lines in the vertical direction is 720 (step S107). If affirmative, the sequence proceeds to a step S108, but, if not, the vertical resolution is identified as 1080 lines and the sequence proceeds to a step S109.

In the aforementioned step S106, S108 or S109, the television monitor 21 displays an EPG respectively shown in Fig. 6, 7 or 8.

Figs. 6, 7 and 8 show examples of EPG display, in which the channel names are shown in the horizontal direction and the broadcasting time zones (starting times) are shown in the vertical direction. In the horizontal direction, the currently received channel is displayed at the left-hand end, and plural channels are displayed in succession at the right. In the vertical direction, the current time is shown at the highest position, and later times zones are displayed in succession thereunder. The frame structure of the EPG is determined according to the display resolution by an instruction from the MPU 11 to the graphic generation circuit 8 so as to place a framing line in the vertical direction for each channel and, in the horizontal direction, for every hour in consideration of the duration of the program, namely except for a program exceeding one hour. In the frame generated for each channel and for each time zone, there is displayed the "program name" eventually accompanied by "program content explanation". In the preparation of the EPG, the channel name is extracted from the SDT section and is displayed in the uppermost frame.

At first, in the aforementioned step S106, the MPU 11 selects the content of display in the display item as "program name only" in the EIT data, then selects, from the font ROM 14, a small font corresponding to the characters of the channel name, time zone (starting time) and program name, and prepares and sends original display data to the graphic generation circuit 8, which generates and outputs framed graphic data (display data) through the synthesis circuit 6 to the image terminal 7. In response the television monitor 21 displays the EPG as shown in Fig. 6. Thereafter the sequence proceeds to a step S110. The "program content explanation" in the EIT data are excluded from the content of display in the display item.

For example, in the channel name "ch120: Niiyama Television" at the time zone "7:00" shown in Figs. 6 and 7, the content of display in the corresponding frame in Fig. 6 is "program name only" which is "News and weather report at 7:00", but in Fig. 7 additionally shows "Kumiko Endou" as "program content explanation".

On the other hand, in the aforementioned step S108, the content of display in the display item is selected as "program name" and "program content explanation" in the EIT data, and a small font corresponding to the characters of the channel name, time zone and "program name and program content explanation" is selected from the font ROM 14, and, as in the step S106, the framed graphic data are outputted from the image terminal 7. Thus the television monitor 21 displays the EPG as shown in Fig. 7. Thereafter the sequence proceeds to a step S110.

On the other hand, in the aforementioned step S109, the resolution is identified as 1080 lines in the vertical direction and the content of display in the display item is selected as "program name" and "program content explanation" in the EIT data, and a large font corresponding to the characters of the channel name, time zone and "program name and program content explanation" is selected from the font ROM 14, and, as in the step S106, the framed graphic data are outputted from the image terminal 7. Thus the television monitor 21 displays the EPG as shown in Fig. 8.

Thereafter the sequence proceeds to a step S110.

Thus, in a television monitor with a given aspect ratio and a given scanning method for the displayable image format, the displayable area becomes larger as the number of scanning lines in the vertical direction (number of effective scanning lines) increases, so that a larger amount of information is displayed in easily visible manner, utilizing such displayable area. For example, in the display shown in Fig. 7, the amount of information is increased in comparison with that shown in Fig. 6 by adding "program content explanation". Also in comparison with the display shown in Fig. 7, that shown in Fig. 8 has the same content of display but is displayed in a larger font. A larger font is employed in order to improve visibility from a larger distance, since the image size generally becomes larger for a higher resolution and is generally observed from a larger distance.

Then a step S110 maintains the state until the EPG display is released, and terminates the EPG display when the display is released, whereupon the sequence returns to the step S101. In the state prior to the cancellation of the EPG display, the user can move a cursor on the image vertically and horizontally by the cursor keys 174 to 177 on the remote controller 17 and depress the determination key 173 in a certain position of the cursor, thereby observing the program corresponding to the cursor position. Also the user can instruct the cancellation of the EPG display by depressing the return key 183 on the EPG display image.

In the present embodiment, there has been explained an example of EPG display with 3 channels and 4 hours for the time zone, but such numbers are not restrictive.

Also in the present embodiment, there has been explained a television monitor capable of displaying the image format by the progressive scanning method with an aspect ratio of 16:9, but such scanning method or aspect ratio is not restrictive and the MPU 11 can determine the display content and font of the EPG display so as to vary the information amount or font in the EPG display according to the resolution in the television monitor of a given aspect ratio and a given scanning method.

In the present embodiment, the information on the display resolution of the television monitor 21 is received by checking the voltage level of the signal through the image terminal 7 and the display content of the EPG display is changed according to such resolution to vary the information amount, whereby the displayable area of the television monitor 21 can be effectively utilized.

Also the font of the EPG display is varied according to the resolution of the monitor, whereby the display can be made easier to use and to observe depending on the image size. Besides, even in case of a change in the monitor resolution, the user is not required to enter such change and the optimum display can always be realized in automatic manner. Consequently, there can be automatically realized, without any cumbersome operation, the easily observable display effectively utilizing the displayable area of the monitor depending on the resolution thereof.

(Second embodiment)

In the first embodiment, the content of each display item is increased or decreased or the font is selected according to the resolution of the television monitor 21. In the present second embodiment, in contrast, the number of display items is increased or decreased or the font is changed according to the resolution. In the present second embodiment, therefore, the EPG display process is different from that in the first embodiment, but the configuration of the display system composed of the television tuner 20, television monitor 21, remote controller 17 etc. is same as that in the first embodiment and will not, therefore, be explained further.

Fig. 9 is a flow chart showing the operation sequence of the MPU 11 in the EPG display process of the present embodiment, and Figs. 10 and 11 show examples of EPG display. The basic structure of the EPG display is same as that in the first embodiment. Also in the present embodiment, there will be explained the EPG display in a television monitor, having an aspect ratio of 16:9, capable of displaying the image format in the progressive scanning and having a resolution of 480, 720 or 1080 lines in the vertical direction.

Steps S201 to S205 in Fig. 9 respectively correspond to the steps S101 to S105 in Fig. 5.

If the discrimination in a step S205 identifies that the resolution is 480 lines in the vertical direction, the sequence proceeds to a step S206, but, if not 480 lines, there is discriminated whether the resolution is 720 lines in the vertical direction (step S207), and, if affirmative, the sequence proceeds to a step S208, but, if not, the resolution is judged as 1080 lines in the vertical direction and the sequence proceeds to a step S209.

In the aforementioned step S206, S208 or S209, the television monitor 21 displays the EPG as respectively shown in Fig. 6, 10 or 11.

At first, in the aforementioned step S206, the MPU 11 prepares a table format in consideration of the channel number, starting time and program duration in the EIT section, then selects the "program name only" in the EIT data as the content of the display item in the actual EPG, arranges three channel names in the horizontal direction and a time zone of four hours in the vertical direction, and selects a small font corresponding to the characters of the channel name, time zone and program name from the font ROM 14. Then there is executed a process same as in the step S106 in Fig. 5 to output the framed graphic data from the image terminal 7. Thus the television monitor 21 displays the EPG as shown in Fig. 6, and the sequence thereafter proceeds to a step S210.

On the other hand, in the aforementioned step S208, the MPU 11 prepares a table format in consideration of the channel number, starting time and program duration in the EIT section, then selects the "program name only" in the EIT data as the content of the display item in the actual EPG, arranges four channel names in the horizontal direction and a time zone of six hours in the vertical direction, and selects a small font corresponding to the characters of the channel name, time zone and program name from the font ROM 14. Then there is executed a process same as in the step S106 in Fig. 5 to output the framed graphic data from the image terminal 7. Thus the television monitor 21 displays the EPG as shown in Fig. 10, and the sequence thereafter proceeds to a step S210.

Also, in the aforementioned step S209, the resolution is identified as 1080 lines in the vertical direction and the MPU 11 prepares a table format in consideration of the channel number, starting time and program duration in the EIT section, then selects the "program name only" in the EIT data as the content of the display item in the actual EPG, arranges four channel names in the horizontal direction and a time zone of six hours in the vertical direction, and selects a large font corresponding to the characters of the channel name, time zone and program name from the font ROM 14. Then there is executed a process same as in the step S106 in Fig. 5 to output the framed graphic data from the image terminal 7. Thus the television monitor 21 displays the EPG as shown in Fig. 11, and the sequence thereafter proceeds to a step S210.

Thus, for a given aspect ratio, the displayable area becomes larger with the increase in the number of scanning lines in the vertical direction, and the information of a larger amount is displayed in easily visible manner, effectively utilizing the displayable area. For example, in comparison with the display in Fig. 6, that in Fig. 10 has a larger amount of information by an increase in the number of display items, based on an increase in the number of channel names from 3 to 4 in the horizontal direction and an increase in the time zone from 4 hours to 6 hours in the vertical direction. Also in comparison with the display shown in Fig. 10, that shown in Fig. 11 has a larger font though the number of the display items remains same. Such change is to improve the visibility as in the foregoing first embodiment.

Then a step S210 executes a process similar to the step S110 in Fig. 5, whereupon the sequence returns to the step S201.

In the present embodiment, there has been explained a television monitor capable of displaying the image format by the progressive scanning method with an aspect ratio of 16:9, but such scanning method or aspect ratio is not restrictive and the MPU 11 can determine the display content and font of the EPG display so as to vary the information amount or font in the EPG display according to the resolution in the television monitor of a given aspect ratio and a given scanning method.

In the present embodiment, the resolution of the television monitor 21 is obtained through the image terminal 7 and the amount of information is changed by changing the number of display items such as the channel names and time zone of the EPG according to such resolution. Also the font of the EPG display is varied according to the resolution of the monitor. Consequently, as in the foregoing first embodiment, there can be automatically realized, without any cumbersome operation, the easily observable display effectively utilizing the displayable area of the monitor depending on the resolution thereof.

(Third embodiment)

In the first and second embodiments, the content of each display item or the number of display items is increased or decreased or the font is selected according to the resolution of the monitor. In the present third embodiment, in contrast, the number of display items is increased or decreased or the font is changed according to the scanning method of the monitor. In the present second embodiment, therefore, the EPG display process is different from that in the first or second embodiment, but the configuration of the display system composed of the television tuner 20, television monitor 21, remote controller 17 etc. is same as that in the first embodiment and will not, therefore, be explained further.

Fig. 12 is a flow chart showing the EPG display process of the present embodiment, and Fig. 13 shows an example of EPG display. The basic structure of the EPG display is same as that in the first embodiment. In the present embodiment, there will be explained the EPG display in a television monitor, having an aspect ratio of 16:9, capable of displaying the image format of 480 lines in the vertical direction in progressive or interlaced scanning method.

Steps S301 to S303 in Fig. 12 respectively correspond to the steps S101 to S103 in Fig. 5. Then, in a step S304, the MPU 11 reads the voltage level in the line 2 of the image terminal 7, thereby learning the scanning method to be used in the display by the connected television monitor 21 (cf. Fig. 2).

Then there is discriminated whether the scanning method is progressive (step S305), and, if affirmative, the sequence proceeds to a step S306, but, if not, the scanning method is judged as interlaced scanning (step S307) and the sequence proceeds to a step S308.

In the aforementioned step S306 or S308, the television monitor 21 displays the EPG as respectively shown in Fig. 6 or 13.

At first, in the aforementioned step S306, the MPU 11 instructs the graphic generation circuit 8 so as to draw a frame line in the vertical direction for each channel and a frame line in the horizontal direction for every hour in consideration of the program duration and except for a program exceeding one hour. The display is to be made for 3 channels and 4 hours, and the MPU 11 selects the "program name only" in the EIT data as the content of the display item, and selects a small font corresponding to the characters of the channel name, time zone and program name from the font ROM 14. Then there is executed a process same as in the step S106 in Fig. 5 to output the framed graphic data from the image terminal 7. Thus the television monitor 21 displays the EPG as shown in Fig. 6. Such display is designed with emphasis on the amount of information contained in the EPG, since, in the progressive scanning, even a fine character can be clearly recognized and satisfactory visibility can be assured even with the small font. The sequence thereafter proceeds to a step S309.

On the other hand, in the aforementioned step S308, the MPU 11 selects the display for 2 channels and 3 hours, also selects the "program name only" in the EIT data as the content of the display item, and selects a large font corresponding to the characters of the channel name, time zone and program name from the font ROM 14. Then there is executed a process same as in the step S106 in Fig. 5 to output the framed graphic data from the image terminal 7. Thus the television monitor 21 displays the EPG as shown in Fig. 13. Such display is designed with emphasis on the visibility of characters even with a decrease in the amount of information contained in the EPG, since, in the interlaced scanning, fine characters cannot be clearly recognized. The sequence thereafter proceeds to a step S309.

Thus, for a television monitor of a given resolution and a given aspect ratio, the visibility of characters etc. varies according to the scanning method, so that it is intended to display a largest possible amount of information within an extent not deteriorating the visibility of the characters etc. according to the scanning method, effectively utilizing the displayable area. For example, in comparison with the display shown in Fig. 6 (progressive scanning), the display shown in Fig. 13 (interlaced scanning) has a decrease in the number of channel names in the horizontal direction from 3 to 2 and a decrease in the time zone from 4 hours to 3 hours, whereby the number of the display items is decreased but the font is made larger to secure the visibility of the characters.

Then a step S309 executes a process similar to the step S110 in Fig. 5, whereupon the sequence returns to the step S301.

In the present embodiment, there has been explained a television monitor having an aspect ratio of 16: 9 and a resolution of 480 lines in the vertical direction, but such scanning method or aspect ratio is not restrictive and the MPU 11 can determine the display content and font of the EPG display so as to vary the information amount or font in the EPG display according to the scanning method in the television monitor of a given aspect ratio and a given resolution.

In the present embodiment, the scanning method of the television monitor 21 is obtained through the image terminal 7 and the amount of information is changed by changing the number of display items (channel names and time zone) of the EPG according to such scanning method. Also the font of the EPG display is varied according to the scanning method of the monitor. More specifically, the amount of information contained in the EPG is increased by increasing the number of display items in the small font in the progressive scanning method in which the small characters are easily visible, and the visibility of the characters can be maintained by decreasing the number of display items in the large font in the interlaced scanning method in which the small characters are difficult to observe.

Therefore, easily visible display can be automatically realized without any cumbersome operation, effectively utilizing the displayable area of the monitor depending on the scanning method.

(Fourth embodiment)

In the first, second and third embodiments, the content of each display item or the number of display items is increased or decreased or the font is selected according to the resolution or the scanning method of the monitor. In the present third embodiment, in contrast, the number of display items in the horizontal direction is increased or decreased according to the aspect ratio of the monitor. In the present fourth embodiment, therefore, the EPG display process is different from that in the first to third embodiments, but the configuration of the display system composed of the television tuner 20, television monitor 21, remote controller 17 etc. is same as that in the first embodiment and will not, therefore, be explained further.

Fig. 14 is a flow chart showing the EPG display process of the present embodiment, and Fig. 15 shows an example of EPG display. The basic structure of the EPG display is same as that in the first embodiment. In the present embodiment, there will be explained the EPG display in a television monitor, having a resolution of 480 lines in the vertical direction, capable of displaying the image format in the progressive scanning method and adapting to aspect ratios of 16:9 and 4:3.

Steps S401 to S403 in Fig. 14 respectively correspond to the steps S101 to S103 in Fig. 5. Then, in a step S404, the MPU 11 reads the voltage level in the line 3 of the image terminal 7, thereby learning the aspect ratio to be used in the display by the connected television monitor 21 (cf. Fig. 2). Thus the aspect ratio is designated by the television monitor 21. In the present embodiment, it is assumed that the television monitor 21 designates a resolution of 480 lines in the vertical direction and the progressive scanning method.

Then there is discriminated whether the aspect ratio is 16:9 (step S405), and, if affirmative, the sequence proceeds to a step S406, but, if not, the aspect ratio is judged as 4:3 and the sequence proceeds to a step S407.

In the aforementioned step S406 or S407, the television monitor 21 displays the EPG as respectively shown in Fig. 6 or 15.

At first, in the aforementioned step S406, the MPU 11 instructs the graphic generation circuit 8 so as to draw a frame line in the vertical direction for each channel and a frame line in the horizontal direction for every hour in consideration of the program duration and except for a program exceeding one hour. The display is to be made for 3 channels and 4 hours, and the MPU 11 selects the "program name only" in the EIT data as the content of the display item, and selects a small font corresponding to the characters of the channel name, time zone and program name from the font ROM 14. Then there is executed a process same as in the step S106 in Fig. 5 to output the framed graphic data from the image terminal 7. Thus the television monitor 21 displays the EPG as shown in Fig. 6. Such display is designed to effectively utilize the display area by increasing the amount of information in the horizontal direction, since the resolution in the horizontal direction is higher in the aspect ratio of 16:9. Also characters etc. are extended laterally and become less recognizable if the amount of information is maintained same as in the aspect ratio 4:3. The sequence thereafter proceeds to a step S408.

On the other hand, in the aforementioned step S407, the MPU 11 selects the display for 2 channels and 4 hours, also selects the "program name only" in the EIT data as the content of the display item, and selects a small font corresponding to the characters of the channel name, time zone and program name from the font ROM 14. Then there is executed a process same as in the step S106 in Fig. 5 to output the framed graphic data from the image terminal 7. Thus the television monitor 21 displays the EPG as shown in Fig. 15. Such display is designed to decrease the amount of information in the horizontal direction, since the aspect ratio of 4:3 has a lower resolution in the horizontal direction in comparison with the resolution of 16:9. The sequence thereafter proceeds to a step S408.

Thus, the displayable area is effectively utilized according to the aspect ratio to achieve appropriate display of high visibility. For example, in comparison with the display shown in Fig. 6 (16:9), the display shown in Fig. 15 (4:3) has a decrease in the number of channel names in the horizontal direction from 3 to 2 because of the lower resolution in the horizontal direction, whereby the amount of information is decreased.

Then a step S408 executes a process similar to the step S110 in Fig. 5, whereupon the sequence returns to the step S401.

In the present embodiment, there has been explained a television monitor having a resolution of 480 lines in the vertical direction and capable of displaying the image format in the progressive scanning method, but such resolution or scanning method is not restrictive and the MPU 11 can determine the display content of the EPG display so as to vary the number of display items in the horizontal direction of the EPG display according to the aspect ratio in the television monitor of a given resolution and a given scanning method.

In the present embodiment, the aspect ratio of the television monitor 21 is obtained through the image terminal 7 and the amount of information is changed by changing the number of channel names in the EPG according to such aspect ratio. Also since the resolution in the horizontal direction is higher in the aspect ratio 16:9 in comparison with the aspect ratio 4:3, the number of the channel names displayed in the horizontal direction is increased thereby increasing the information amount and effectively utilizing the display area to secure a display easy to observe and easy to use.

Therefore, easily visible display can be automatically realized without any cumbersome operation, effectively utilizing the displayable area of the monitor depending on the aspect ratio. (Fifth embodiment)

In the following there will be explained a fifth embodiment in which the configuration of the display system is different from that in the foregoing first to fourth embodiments and is such that the information of the television monitor is serially informed to the television tuner 20 in response to the turning-on of power supply thereto. The process of varying the content or format of the EPG display based on the monitor information entered from the television monitor is similar to that in the foregoing first to third embodiments and will not, therefore, be explained further.

Now reference is made to Fig. 16 for explaining the configuration of the display system of the present embodiment.

A television monitor 41 receives component color difference image signals Y, Pb, Pr from the television tuner 20 and generates, by a drive circuit 50, signals suitable for display in a display unit 51. It also receives an audio signal and amplifies such signal in an amplifier 52 to emit a sound from an incorporated speaker 53. A resistor 42, pulled up to the power supply voltage Vcc of the television tuner 20, is connected through a signal line 44 to a resistor 43 pulled down to the ground level of the television monitor 41 and is also connected to an MPU 47.

In such configuration, when the power supply in the television tuner 20 is turned off, the signal line 44 is pulled down by the resistor 43, so that the MPU 47 judges the signal line 44 as "low level state". When the power supply of the television tuner 20 is turned on, since the signal line 44 is pulled up by the resistor 42, so that the MPU 47 judges the signal line 44 as "high level state". In this manner the MPU 47 discriminates whether the power supply of the television tuner 20 is on or off by detecting the level of the signal line 44.

The MPU 47 of the television monitor 41 can send the information of the television monitor 41 to the MPU 11 of the television turner 20 through a serial communication line 46. Such serial information is for example represented by 8-bit information following a start bit, and such start bit is represented when the communication line 46 remains in the high level state and is shifted to the low level state at a certain moment.

The uppermost 3 bits from b7 to b5 indicate the type of command, and "010" indicates the monitor information. In case of the monitor information, the succeeding two bits from b4 to b3 indicate the vertical resolution, wherein "10", "01" and "00" respectively indicate 1080, 720 and 480 lines. One bit b2 indicates the scanning method, wherein "1" and "0" respectively indicates progressive and interlaced method. Two bits from b1 to the lowermost b0 indicate the aspect ratio of the monitor, wherein "10" indicates 16:9, "01" indicates a letter box and "00" indicates 4:3. After the data transfer, the level of the communication line 46 returns to the high level state. The bit duration is determined in advance for example at 3 msec.

Fig. 18 is a flow chart for monitor information transfer. The MPU 47 of the television monitor 41 detects the level of the signal line 44, and, if it is in the "high level state" indicating that the power supply of the television tuner 20 is turned on (S55), judges that the monitor information can be transmitted and transmits the information on the resolution, scanning method and aspect ratio through the communication line 46 by serial communication as shown in Fig. 18 (S56). On the other hand, if the step S55 identifies that the power supply is turned off, the sequence waits for a predetermined period (S57) and then returns to the step S55, whereby the monitor information is transmitted while the power supply of the television tuner is turned on and the television tuner 20 is rendered capable of learning the type of the monitor.

In the present embodiment, the monitor information such as the aspect ratio, resolution and scanning method of the television monitor 41 is obtained through the serial communication line 46 and the amount of information is changed by changing the content or format of the EPG display according to such monitor information.

Therefore, easily visible display can be automatically realized without any cumbersome operation, effectively utilizing the displayable area of the monitor.

In the foregoing embodiments, for changing the amount of information, there are increased or decreased the number of channel names, the number of hours in the time zone and the content of each display item, but it is also possible, in addition to the foregoing embodiments, to increase or decrease any one only of these parameters or any suitable combination thereof, or to increase of decrease any other parameter.

Also in the foregoing embodiments, there has been explained a change in the font in addition to the change in the amount of information, but it is also possible, in addition to the foregoing embodiments, to change the font only or to change the font in suitable combination with all the aforementioned parameters or a part thereof.

Also in the foregoing embodiments, there have been separately explained the process according to the resolution, the process according to the scanning method and the process according to the aspect ratio, but such embodiments are not restrictive and there may be employed various combinations of the processing parameters such as a process according to the resolution and scanning method, a process according to the resolution and aspect ratio, a process according to the scanning method and aspect ratio or a process according to the resolution, scanning method and aspect ratio.

Also in the content of format of the EPG display, the number of channel names, that of hours in the time zone or the number of fonts is not limited to that explained in the foregoing, and the content of display in the display item is not limited to "program name" and "program content explanation". Also the EPG is not limited to a program table showing the time zone in the vertical axis and the channels in the horizontal axis.

Also in the foregoing embodiments, there has been explained, as an example, the process for displaying the EPG (electronic program guide), but such example is not restrictive and the present invention is likewise applicable to any data to be displayed on the television monitor 21. Also the original data are not limited to those obtained by reception of a digital broadcasting wave but may be entered from another memory medium.

The objects of the present invention may naturally be also attained by supplying a display control apparatus or a display system with a memory medium storing program codes of a software realizing the functions of the aforementioned embodiments and by reading and executing the program codes stored in such memory medium by a computer (or CPU or MPU) of such apparatus of system.

In such case, the program codes themselves read from the memory medium realize the novel functions of the present invention, and the memory medium storing the program codes constitutes the present invention.

The memory medium for supplying the program codes can be, for example, a floppy disk, a hard disk, an optical disk, a magnetooptical disk, a CD-ROM, a CD-R, a magnetic tape, a non-volatile memory card, or a ROM.

The present invention includes not only a case where the computer executes the read program codes to realize the functions of the aforementioned embodiments but also a case where an operating system or the like functioning on the computer executes all the processes or a part thereof under the instructions of the program codes, thereby realizing the functions of the aforementioned embodiments.

The present invention further includes a case where the program codes read from the memory medium are once stored in a memory provided in a function expansion board inserted into the computer or a function expansion unit connected thereto and a CPU or the like provided in such function expansion board or function expansion unit executes all the processes or a part thereof under the instruction of the program codes thereby realizing the functions of the aforementioned embodiments.

As explained in the foregoing, the present invention enables to achieve easily visible display in automatic manner, effectively utilizing the displayable area of the monitor and without any cumbersome operation.

## Claims

**1.** A display control apparatus connectable to a monitor, comprising:

input means for entering monitor information outputted from said monitor and related to the display function of said monitor;
generation means for generating display data for said monitor according to said monitor information entered by said input means; and
display control means for outputting said display data, generated by said generation means, to said monitor for display thereon.

**2.** An apparatus according to claim 1, wherein:

said generation means changes an amount of information indicated by said display data, according to said monitor information entered by said input means.

**3.** An apparatus according to claim 1, wherein:

said monitor information includes information on at least one of display resolution, scanning method and aspect ratio of said monitor.

**4.** An apparatus according to claim 3, wherein:

said input means enters information on the display resolution of said monitor; and
said generation means generates said display data in such a manner as to increase an amount of information indicated by said display data as said display resolution becomes higher.

**5.** An apparatus according to claim 3, wherein:

said input means enters information on the scanning method of said monitor; and
said generation means generates said display data in such a manner that an amount of information indicated by said display data generated when said scanning method is progressive method is higher than an amount of information indicated by said display data generated when said scanning method is interlaced method.

**6.** An apparatus according to claim 3, wherein:

said input means enters information on the aspect ratio of said monitor; and
said generation means generates said display data in such a manner as to increase an amount of information in a horizontal direction indicated by said display data as the image size defined by said aspect ratio becomes more oblong in the horizontal direction.

**7.** An apparatus according to claim 1, wherein:

said display data are data for displaying an electronic program guide.

**8.** An apparatus according to claim 7, wherein:

said electronic program guide assumes a format of a program table having channel names and broadcasting time of programs of television broadcastings respectively in vertical (or horizontal) axis and in horizontal (or vertical) axis.

**9.** An apparatus according to claim 8, wherein:

said generation means controls an amount of information indicated by said electronic program guide by increasing or decreasing the axes of said channel name and said broadcasting time according to said monitor information entered by said input means.

**10.** An apparatus according to claim 8, wherein:

said program table is capable of displaying a program name and detailed program information in each cell; and
said generation means controls an amount of information indicated by said electronic program guide by increasing or decreasing an amount of said detailed program information according to said monitor information entered by said input means.

**11.** An apparatus according to claim 1, wherein:

said generation means is capable of selecting plural fonts, and generates said display data in such a manner as to vary font of character to be displayed on said monitor according to said monitor information entered by said input means.

**12.** An apparatus according to claim 11, wherein:

said generation means increases font size of said character as the display resolution of said monitor increases.

**13.** An apparatus according to claim 11, wherein:

said generation means increases font size of said character when the scanning method of said monitor, entered by said input means, is interlaced method, in comparison with a case in which said scanning method is progressive method.

**14.** An apparatus according to claim 1, further comprising:

broadcasting reception means for receiving broadcasting data transmitted by television broadcasting;

wherein said generation means generates said display data based on the broadcasting data received by said broadcasting reception means.

**15.** An apparatus according to claim 1, wherein:

said input means enters said monitor information from said monitor, in response to a power supply turning-on operation of said display control apparatus.

**16.** An apparatus according to claim 1, further comprising:

display instruction means for instructing display of said display data;

wherein said input means enters said monitor information from said monitor in response to an instruction from said display instruction means.

**17.** A display control method for controlling a display apparatus connectable to a monitor, comprising steps of:

entering monitor information outputted from said monitor and related to the display function of said monitor;
generating display data for said monitor according to said entered monitor information; and
outputting said generated display data to said monitor for display thereon.

**18.** A method according to claim 17, wherein:

said generation step changes an amount of information indicated by said display data, according to said entered monitor information.

**19.** A method according to claim 17, wherein:

said monitor information includes information on at least one of display resolution, scanning method and aspect ratio of said monitor.

**20.** A method according to claim 19, wherein:

said input step enters information on the display resolution of said monitor; and
said generation step generates said display data in such a manner as to increase an amount of information indicated by said display data as said display resolution becomes higher.

**21.** A method according to claim 19, wherein:

said input step enters information on the scanning method of said monitor; and
said generation step generates said display data in such a manner that an amount of information indicated by said display data generated when said scanning method is progressive method is higher than an amount of information indicated by said display data generated when said scanning method is interlaced method.

**22.** A method according to claim 19, wherein:

said input step enters information on the aspect ratio of said monitor; and
said generation step generates said display data in such a manner as to increase an amount of information in a horizontal direction indicated by said display data as the image size defined by said aspect ratio becomes more oblong in the horizontal direction.

**23.** A method according to claim 17, wherein:

said display data are data for displaying an electronic program guide.

**24.** A method according to claim 23, wherein:

said electronic program guide assumes a format of a program table having channel names and broadcasting time of programs of television broadcastings respectively in vertical (or horizontal) axis and in horizontal (or vertical) axis.

**25.** A method according to claim 24, wherein:

said generation step controls an amount of information indicated by said electronic program guide by increasing or decreasing the axes of said channel name and said broadcasting time according to said entered monitor information.

**26.** A method according to claim 24, wherein:

said program table is capable of displaying a program name and detailed program information in each cell; and
said generation step controls an amount of information indicated by said electronic program guide by increasing or decreasing the amount of said detailed program information according to said entered monitor information.

**27.** A method according to claim 17, wherein:

said generation step is capable of selecting plural fonts, and generates said display data in such a manner as to vary font of character to be displayed on said monitor according to said entered monitor information.

**28.** A method according to claim 27, wherein:

said generation step increases font size of said character as the display resolution of said monitor increases.

**29.** A method according to claim 27, wherein:

said generation step increases font size of said character when the entered scanning method of said monitor is interlaced method, in comparison with a case in which said scanning method is progressive method.

**30.** A method according to claim 17, further comprising a step of:

receiving broadcasting data transmitted by television broadcasting;

wherein said generation step generates said display data based on the broadcasting data received by said broadcasting reception step.

**31.** A method according to claim 17, wherein:

said input step enters said monitor information from said monitor, in response to a power supply turning-on operation of the apparatus executing said display control method.

**32.** A method according to claim 17, further comprising a step of:

instructing display of said display data;

wherein said input step enters said monitor information from said monitor in response to said instruction.

**33.** A display system comprising:

a monitor capable of entering display data, displaying an image or a character based on said entered display data and outputting monitor information relating to the display function of said monitor; and
a display control apparatus for executing control of entering said monitor information outputted from said monitor, generating display data for said monitor based on said monitor information, and outputting said generated display data to said monitor for display thereon.

**34.** A storage medium storing program codes for executing a display control method which comprises steps of:

entering monitor information outputted from a monitor and related to the display function of said monitor;
generating display data for said monitor based on said entered monitor information; and
outputting said generated display data to said monitor for display thereon.

FIG. 1

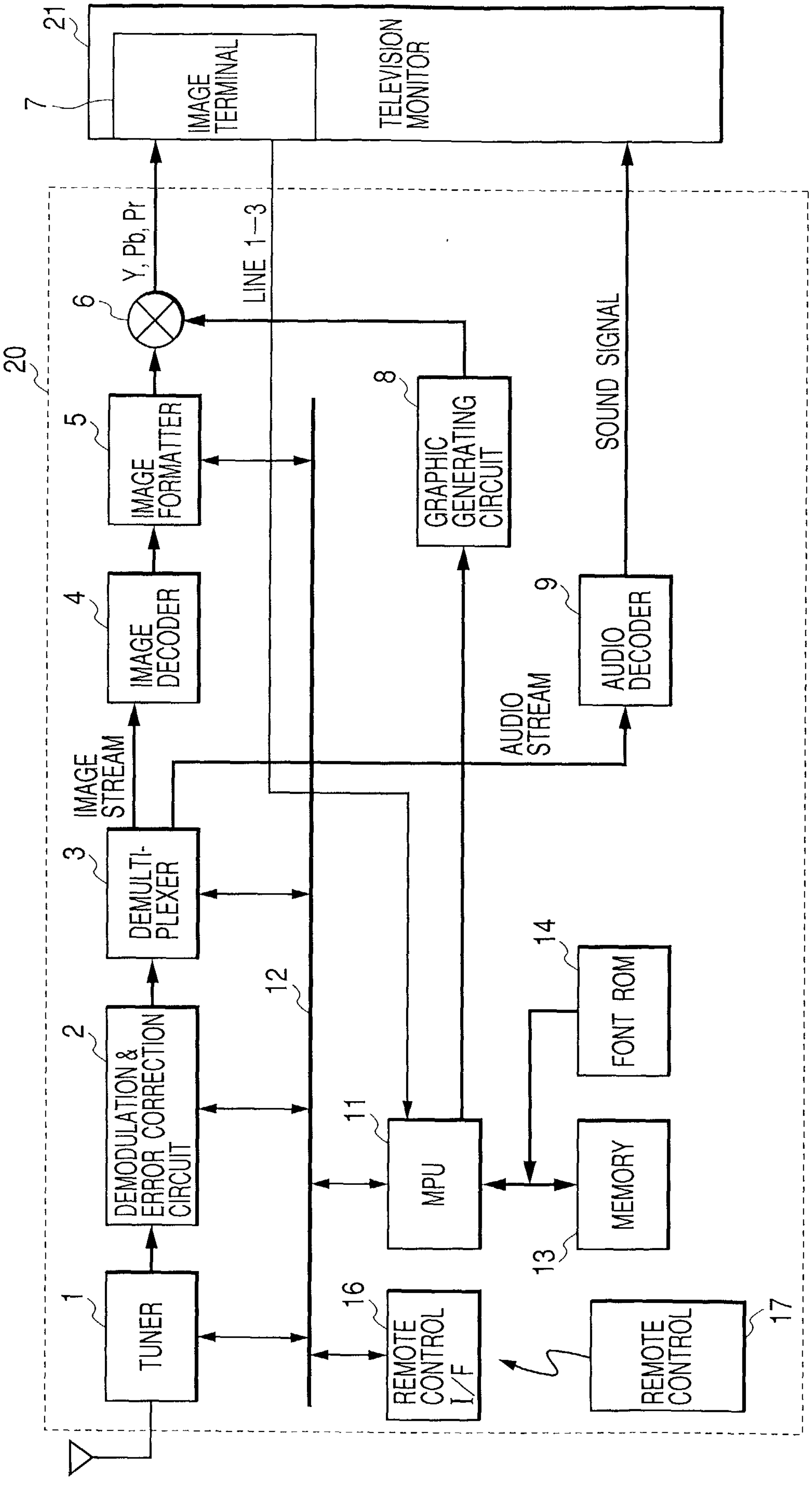

TUNER
DEMODULATION & ERROR CORRECTION CIRCUIT
DEMULTI-PLEXER
IMAGE STREAM
IMAGE DECODER
IMAGE FORMATTER
Y, Pb, Pr
LINE 1—3
IMAGE TERMINAL
TELEVISION MONITOR
GRAPHIC GENERATING CIRCUIT
AUDIO STREAM
AUDIO DECODER
SOUND SIGNAL
MPU
MEMORY
FONT ROM
REMOTE CONTROL I/F
REMOTE CONTROL
1
2
3
4
5
6
7
8
9
11
12
13
14
16
17
20
21

FIG. 2

| | | 5V | 2.2V | 0V |
|---|---|---|---|---|
| LINE 1 | : DISPLAY RESOLUTION | 1080 | 720 | 480 |
| LINE 2 | : SCANNING METHOD | 60p | – | 60 |
| LINE 3 | : ASPECT RATIO | 16:9 | LETTER BOX | 4:3 |

FIG. 3

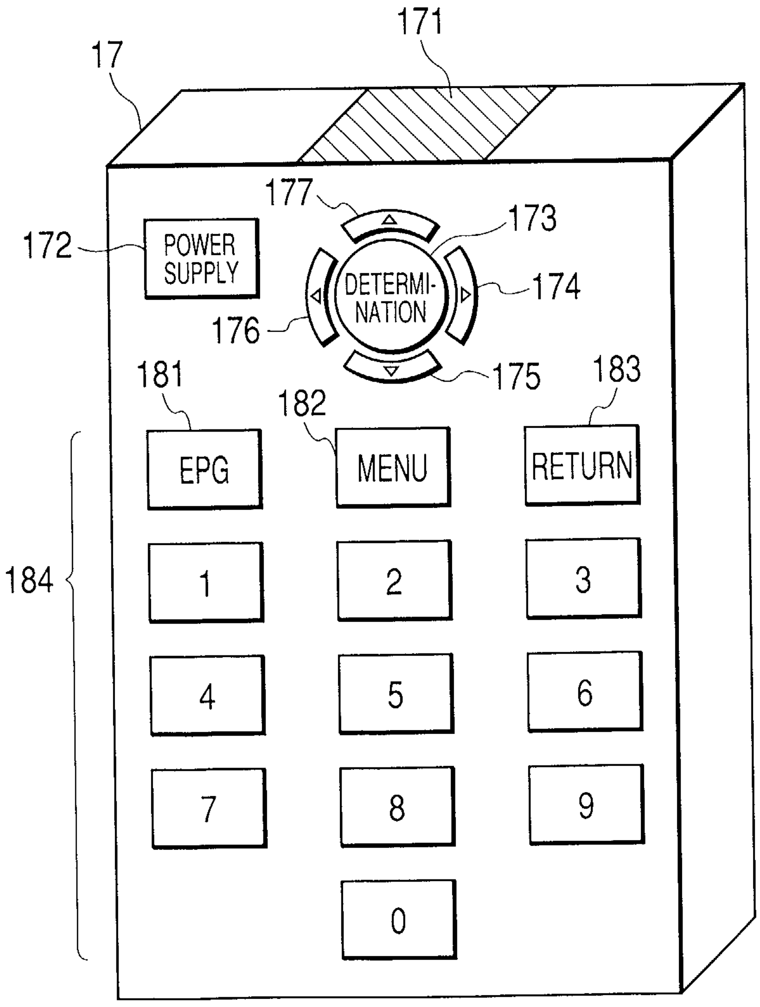

FIG. 4

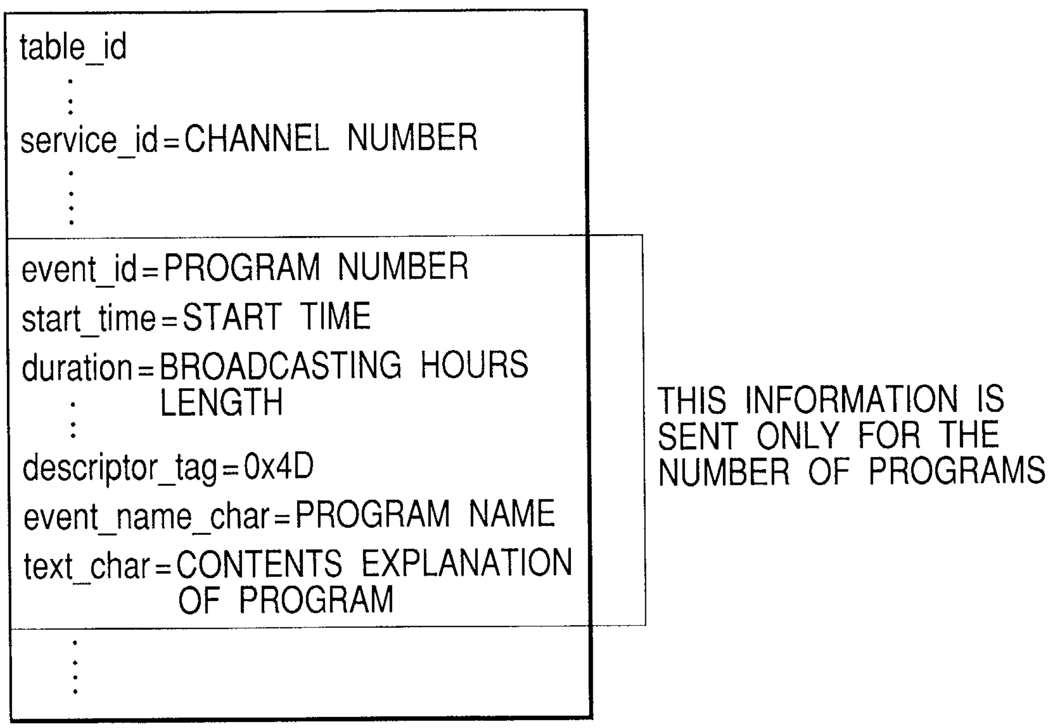


{STRUCTURE OF EIT}

FIG. 5

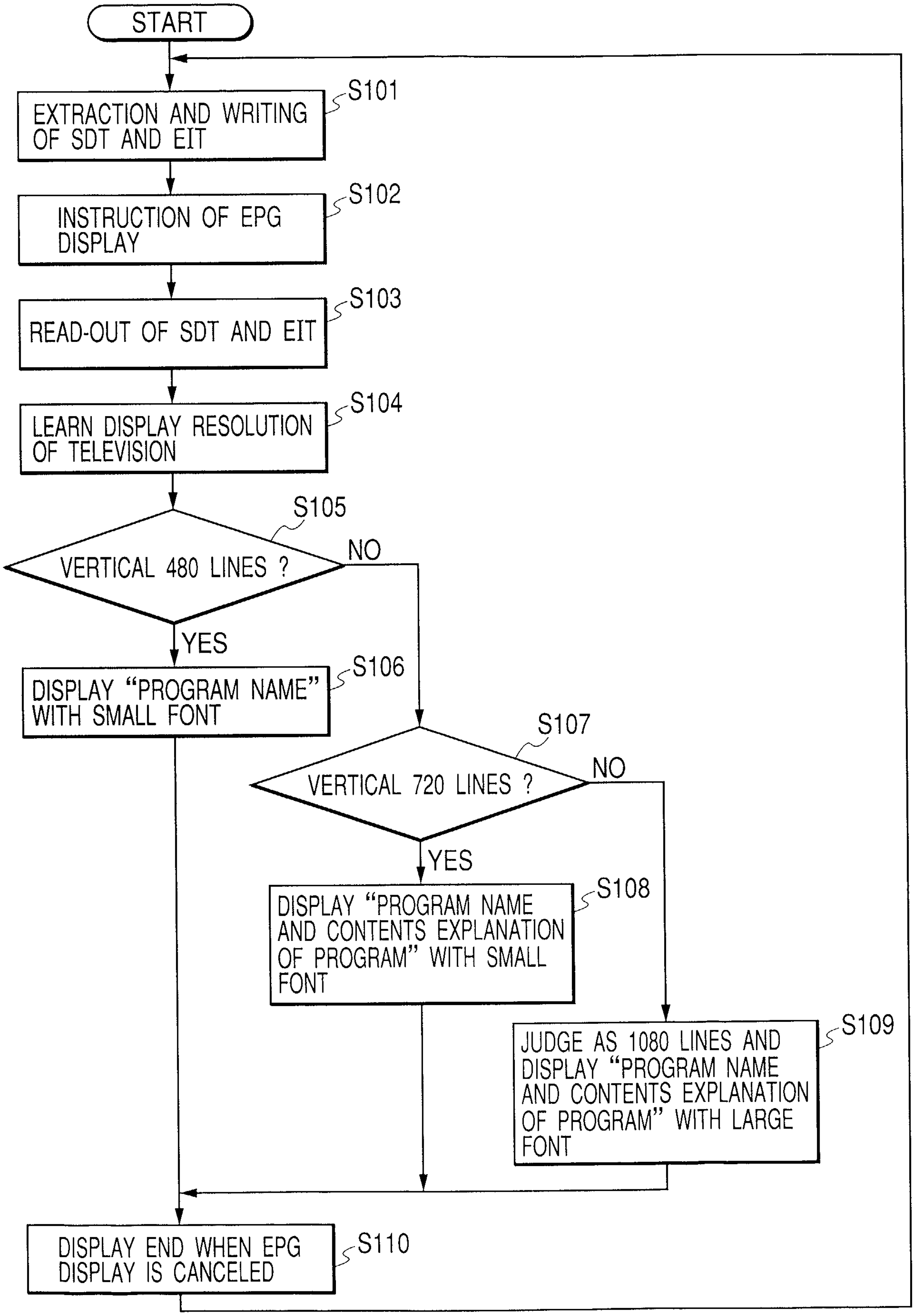
START
EXTRACTION AND WRITING OF SDT AND EIT
S101
INSTRUCTION OF EPG DISPLAY
S102
READ-OUT OF SDT AND EIT
S103
LEARN DISPLAY RESOLUTION OF TELEVISION
S104
VERTICAL 480 LINES ?
S105
NO
YES
DISPLAY "PROGRAM NAME" WITH SMALL FONT
S106
VERTICAL 720 LINES ?
S107
NO
YES
DISPLAY "PROGRAM NAME AND CONTENTS EXPLANATION OF PROGRAM" WITH SMALL FONT
S108
JUDGE AS 1080 LINES AND DISPLAY "PROGRAM NAME AND CONTENTS EXPLANATION OF PROGRAM" WITH LARGE FONT
S109
DISPLAY END WHEN EPG DISPLAY IS CANCELED
S110

FIG. 6

| | ch120 : NIIYAMA TELEVISION | ch123 : TELEVISION HONSHU | ch125 : MAIASA BROADCAST |
|---|---|---|---|
| 7:00 | NEWS AND WEATHER REPORT AT 7:00 | ANIMATION "Mr. SATO OVER THERE" | PROFESSIONAL BASEBALL RELAY BROADCAST "KINKO VS HAKATA TAKA" |
| 8:00 | COMEDY : PEOPLE IN OSAKA | NINETY-EIGHT CHALLENGES ANYTHING | |
| 9:00 | NIIYAMA TELEVISION SPECIAL "MYSTERY OF LIFE" | FRIDAY SUSPENSE THEATER "OOM DETECTIVE! KEIZO NAGAREISI / NAGASAKI-MIYAJIMA DEEP-SEATED GRUDGE TRIP" | HOW ARE YOU "WOMAN WHO MADE ME FOOL" |
| 10:00 | OLD TEMPLE PILGRIMAGE "NARA HORYUJI TEMPLE" | | COOKING SHOW IN WORLD |

RESOLUTION:480, PROGRESSIVE, ASPECT RATIO 16:9, FONT:SMALL

FIG. 7

| | ch120 : NIIYAMA TELEVISION | ch123 : TELEVISION HONSHU | ch125 : MAIASA BROADCAST |
|---|---|---|---|
| 7:00 | NEWS AND WEATHER REPORT AT 7:00<br>KUMIKO ENDOU | ANIMATION "Mr. SATO OVER THERE"<br>VOICE : MASAKO OYAMA EMI YAMASHITA<br>MASATO YAMASHITA YOKO SUGAWARA | PROFESSIONAL BASEBALL RELAY BROADCAST "KINKO VS HAKATA TAKA"<br>HAKATA BIG DOME<br>COLORMAN : MASAYUKI EGAWA<br>SUGURU KAKEFU<br>COMMENTATOR : SADAO MAEKAWA<br>ANNOUNCER (MAIASA BROADCAST) |
| 8:00 | COMEDY : PEOPLE IN OSAKA<br>GORO ITO HIROMI FUJITA<br>YAMADA HANAE SATOMI OKAE | NINETY-EIGHT CHALLENGES ANYTHING<br>KANSAI YABE/CHALLENGE JAPANESE-STYLE DISH! | |
| 9:00 | NIIYAMA TELEVISION SPECIAL<br>"MYSTERY OF LIFE" "THE FORE-FRONT OF LIFE SCIENCE FROM SITE OF ENGINEERING" | FRIDAY SUSPENSE THEATER<br>"OOM DETECTIVE! KEIZO NAGAREISI/ NAGASAKI-MIYAJIMA DEEP-SEATED GRUDGE TRIP"<br>KINYA AISEKI MAI ITO UTAKO TOKIWA<br>MASAO MATUOKA MEGUMI OSAWA<br>KEN HORIUCHI TAKAKO MORI KEI OOISHI | HOW ARE YOU<br>"WOMAN WHO MADE ME FOOL"<br>MAMI TSURUTA HIROSHI SORIMACHI<br>YOSHIE KAWASHIMA KYOUKO FUKAMI |
| 10:00 | OLD TEMPLE PILGRIMAGE<br>"NARA HORYUJI TEMPLE"<br>HISAYA ISHIZAKA | | COOKING SHOW IN WORLD<br>GUEST : DEMI MOOMIN CHAIRMAN : ROBIN WILLIAM |

RESOLUTION:720, PROGRESSIVE, ASPECT RATIO 16:9, FONT:SMALL

FIG. 8

| | ch120 : NIIYAMA TELEVISION | ch123 : TELEVISION HONSHU | ch125 : MAIASA BROADCAST |
|---|---|---|---|
| 7:00 | NEWS AND WEATHER REPORT AT 7:00<br>KUMIKO ENDOU | ANIMATION "Mr. SATO OVER THERE"<br>VOICE : MASAKO OYAMA EMI YAMASHITA<br>MASATO YAMASHITA YOKO SUGAWARA | PROFESSIONAL BASEBALL RELAY BROADCAST "KINKO VS HAKATA TAKA"<br>HAKATA BIG DOME<br>COLORMAN : MASAYUKI EGAWA<br>SUGURU KAKEFU<br>COMMENTATOR : SADAO MAEKAWA<br>ANNOUNCER (MAIASA BROADCAST) |
| 8:00 | COMEDY : PEOPLE IN OSAKA<br>GORO ITO HIROMI FUJITA<br>YAMADA HANAE SATOMI OKAE | NINETY-EIGHT CHALLENGES ANYTHING<br>KANSAI YABE/CHALLENGE JAPANESE-STYLE DISH! | |
| 9:00 | NIIYAMA TELEVISION SPECIAL<br>"MYSTERY OF LIFE" "THE FORE-FRONT OF LIFE SCIENCE FROM SITE OF ENGINEERING" | FRIDAY SUSPENSE THEATER<br>"OOM DETECTIVE! KEIZO NAGAREISI/ NAGASAKI-MIYAJIMA DEEP-SEATED GRUDGE TRIP"<br>KINYA AISEKI MAI ITO UTAKO TOKIWA<br>MASAO MATUOKA MEGUMI OSAWA<br>KEN HORIUCHI TAKAKO MORI KEI OOISHI | HOW ARE YOU<br>"WOMAN WHO MADE ME FOOL"<br>MAMI TSURUTA HIROSHI SORIMACHI<br>YOSHIE KAWASHIMA KYOUKO FUKAMI |
| 10:00 | OLD TEMPLE PILGRIMAGE<br>"NARA HORYUJI TEMPLE"<br>HISAYA ISHIZAKA | | COOKING SHOW IN WORLD<br>GUEST : DEMI MOOMIN CHAIRMAN : ROBIN WILLIAM |

RESOLUTION:1080, PROGRESSIVE, ASPECT RATIO 16:9, FONT:LARGE

FIG. 9

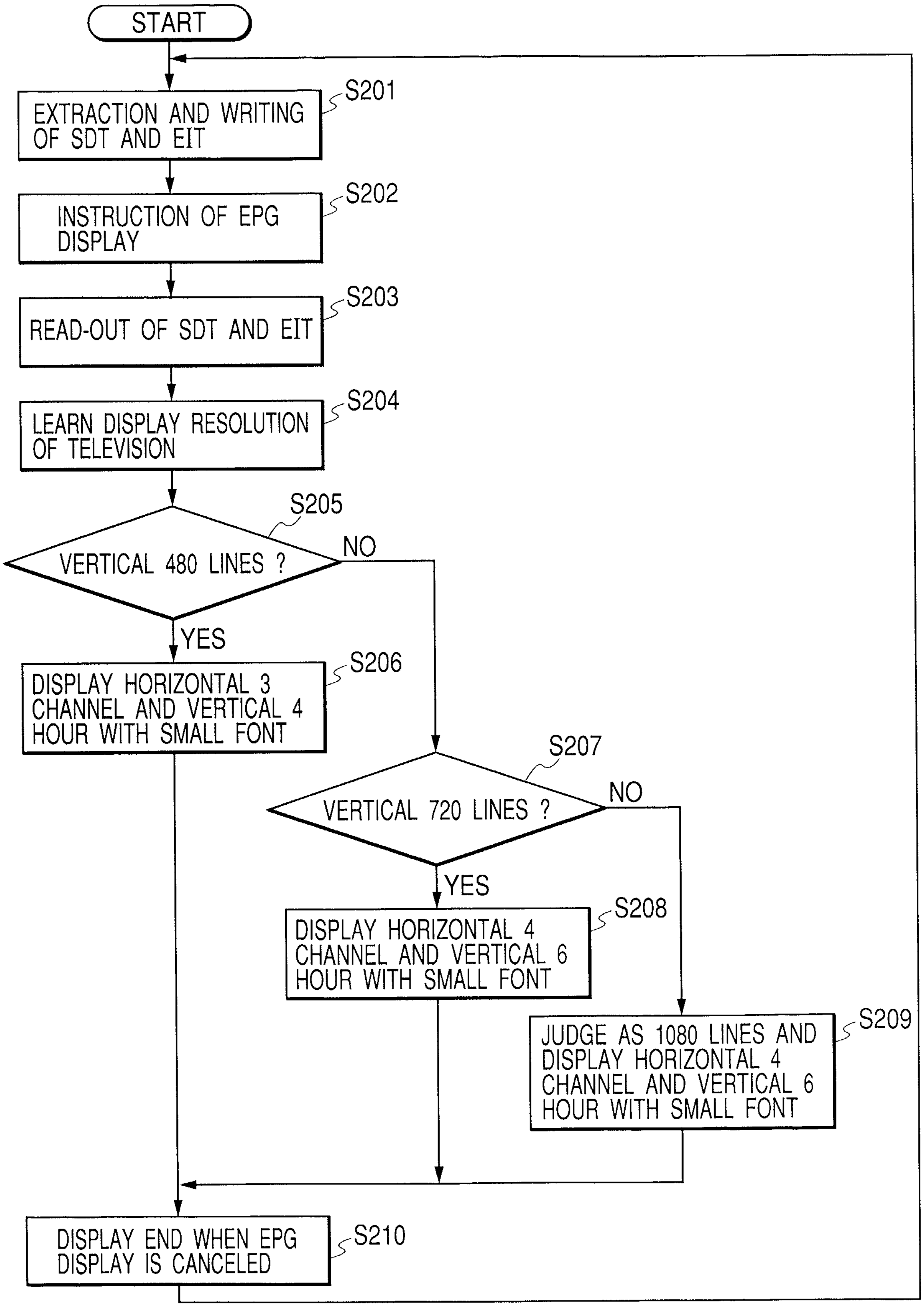
START
EXTRACTION AND WRITING OF SDT AND EIT
S201
INSTRUCTION OF EPG DISPLAY
S202
READ-OUT OF SDT AND EIT
S203
LEARN DISPLAY RESOLUTION OF TELEVISION
S204
VERTICAL 480 LINES ?
S205
NO
YES
DISPLAY HORIZONTAL 3 CHANNEL AND VERTICAL 4 HOUR WITH SMALL FONT
S206
VERTICAL 720 LINES ?
S207
NO
YES
DISPLAY HORIZONTAL 4 CHANNEL AND VERTICAL 6 HOUR WITH SMALL FONT
S208
JUDGE AS 1080 LINES AND DISPLAY HORIZONTAL 4 CHANNEL AND VERTICAL 6 HOUR WITH SMALL FONT
S209
DISPLAY END WHEN EPG DISPLAY IS CANCELED
S210

FIG. 10

| | ch120 : NIIYAMA TELEVISION | ch123 : TELEVISION HONSHU | ch125 : MAIASA BROADCAST | ch210 : SAINOHANA TELEVISION |
|---|---|---|---|---|
| 7:00 | NEWS AND WEATHER REPORT AT 7:00 | ANIMATION "Mr. SATO OVER THERE" | PROFESSIONAL BASEBALL RELAY BROADCAST "KINKO VS HAKATA TAKA" | TIME FOR LAUGHTER BY YOSHIKAWA "YOSHIKAWA ARMY CORPS GENERAL MOBILIZATION" |
| 8:00 | COMEDY : PEOPLE IN OSAKA | NINETY-EIGHT CHALLENGES ANYTHING | | LET'S IDENTIFY ANYTHING! |
| 9:00 | NIIYAMA TELEVISION SPECIAL "MYSTERY OF LIFE" | FRIDAY SUSPENSE THEATER "OOM DETECTIVE! KEIZO | HOW ARE YOU "WOMAN WHO MADE ME FOOL" | FRIDAY MOVIE THEATER "GHOSTWRITER" |
| 10:00 | OLD TEMPLE PILGRIMAGE "NARA HORYUJI TEMPLE" | NAGAREISI/NAGASAKI-MIYAJIMA DEEP-SEATED GRUDGE TRIP" | COOKING SHOW IN WORLD | |
| 11:00 | FRIDAY ALL SPORT | TODAY'S NEWS | WORLD HAPPY TRIP | SING! BEST PARADE |
| 0:00 | HOUR ENCORE "LIFE OF RESTRUCTURING" | FISHING WORLD | MIDNIGHT MOVIE "TRAGEDY OF U" | SERIE A "PERURUGIA VS AC MILAN" |

RESOLUTION:720, PROGRESSIVE, ASPECT RATIO 16:9, FONT:SMALL

FIG. 11

| | ch120 : NIIYAMA TELEVISION | ch123 : TELEVISION HONSHU | ch125 : MAIASA BROADCAST | ch210 : SAINOHANA TELEVISION |
|---|---|---|---|---|
| 7:00 | NEWS AND WEATHER REPORT AT 7:00 | ANIMATION "Mr. SATO OVER THERE" | PROFESSIONAL BASEBALL RELAY BROADCAST "KINKO VS HAKATA TAKA" | TIME FOR LAUGHTER BY YOSHIKAWA "YOSHIKAWA ARMY CORPS GENERAL MOBILIZATION" |
| 8:00 | COMEDY : PEOPLE IN OSAKA | NINETY-EIGHT CHALLENGES ANYTHING | | LET'S IDENTIFY ANYTHING! |
| 9:00 | NIIYAMA TELEVISION SPECIAL "MYSTERY OF LIFE" | FRIDAY SUSPENSE THEATER "OOM DETECTIVE! KEIZO NAGAREISI／NAGASAKI-MIYAJIMA DEEP-SEATED GRUDGE TRIP" | HOW ARE YOU "WOMAN WHO MADE ME FOOL" | FRIDAY MOVIE THEATER "GHOSTWRITER" |
| 10:00 | OLD TEMPLE PILGRIMAGE "NARA HORYUJI TEMPLE" | | COOKING SHOW IN WORLD | |
| 11:00 | FRIDAY ALL SPORT | TODAY'S NEWS | WORLD HAPPY TRIP | SING! BEST PARADE |
| 12:00 | HOUR ENCORE "LIFE OF RESTRUCTURING" | FISHING WORLD | MIDNIGHT MOVIE "TRAGEDY OF U" | SERIE A "PERURUGIA VS AC MILAN" |

RESOLUTION:1080, PROGRESSIVE, ASPECT RATIO 16:9, FONT:LARGE

FIG. 12

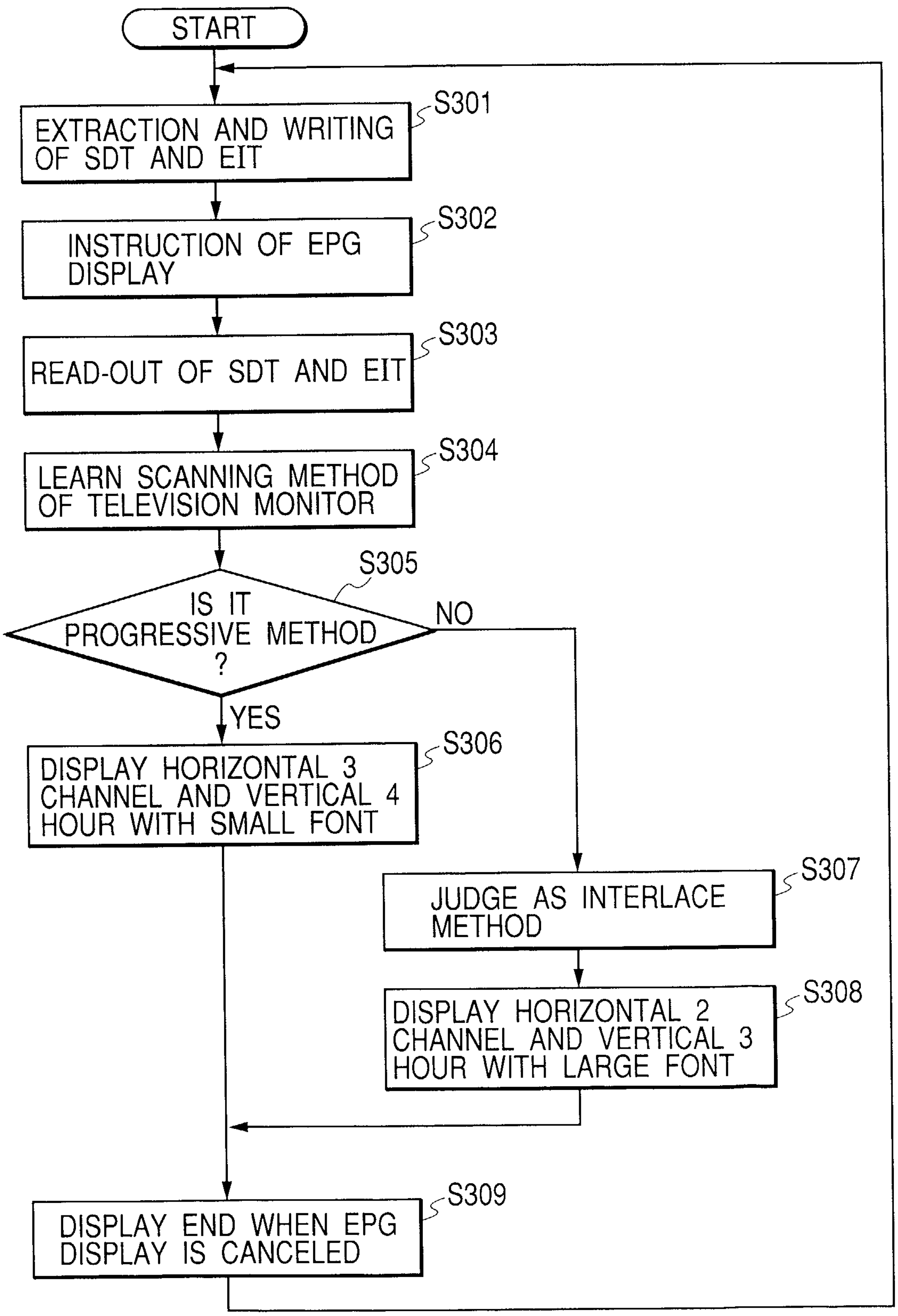
START
EXTRACTION AND WRITING OF SDT AND EIT
S301
INSTRUCTION OF EPG DISPLAY
S302
READ-OUT OF SDT AND EIT
S303
LEARN SCANNING METHOD OF TELEVISION MONITOR
S304
IS IT PROGRESSIVE METHOD ?
S305
NO
YES
DISPLAY HORIZONTAL 3 CHANNEL AND VERTICAL 4 HOUR WITH SMALL FONT
S306
JUDGE AS INTERLACE METHOD
S307
DISPLAY HORIZONTAL 2 CHANNEL AND VERTICAL 3 HOUR WITH LARGE FONT
S308
DISPLAY END WHEN EPG DISPLAY IS CANCELED
S309

FIG. 13

| | ch120 : NIIYAMA TELEVISION | ch123 : TELEVISION HONSHU |
|---|---|---|
| 7:00 | NEWS AND WEATHER REPORT AT 7:00 | ANIMATION "Mr. SATO OVER THERE" |
| 8:00 | COMEDY : PEOPLE IN OSAKA | NINETY-EIGHT CHALLENGES ANYTHING |
| 9:00 | NIIYAMA TELEVISION SPECIAL "MYSTERY OF LIFE" | FRIDAY SUSPENSE THEATER "OOM DETECTIVE! |

RESOLUTION:480, INTERLACE, ASPECT RATIO 16:9, FONT:LARGE

FIG. 14

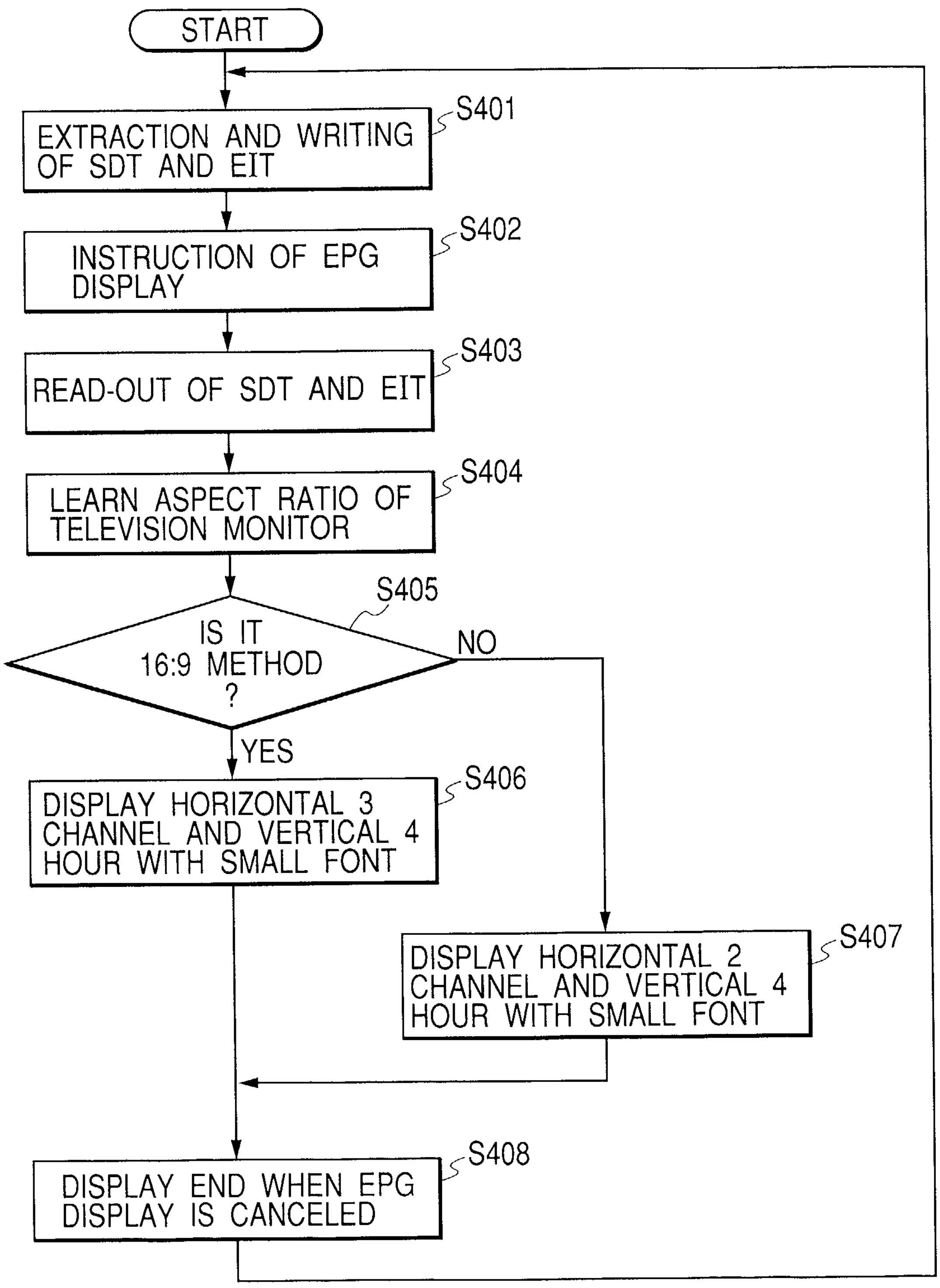
START
EXTRACTION AND WRITING OF SDT AND EIT
S401
INSTRUCTION OF EPG DISPLAY
S402
READ-OUT OF SDT AND EIT
S403
LEARN ASPECT RATIO OF TELEVISION MONITOR
S404
IS IT 16:9 METHOD ?
S405
NO
YES
DISPLAY HORIZONTAL 3 CHANNEL AND VERTICAL 4 HOUR WITH SMALL FONT
S406
DISPLAY HORIZONTAL 2 CHANNEL AND VERTICAL 4 HOUR WITH SMALL FONT
S407
DISPLAY END WHEN EPG DISPLAY IS CANCELED
S408

# FIG. 15

| | ch120 : NIIYAMA TELEVISION | ch123 : TELEVISION HONSHU |
|---|---|---|
| 7:00 | NEWS AND WEATHER REPORT AT 7:00 | ANIMATION "Mr. SATO OVER THERE" |
| 8:00 | COMEDY : PEOPLE IN OSAKA | NINETY-EIGHT CHALLENGES ANYTHING |
| 9:00 | NIIYAMA TELEVISION SPECIAL "MYSTERY OF LIFE" | FRIDAY SUSPENSE THEATER "OOM DETECTIVE! KEIZO NAGAREISI／NAGASAKI-MIYAJIMA DEEP-SEATED GRUDGE TRIP" |
| 10:00 | OLD TEMPLE PILGRIMAGE "NARA HORYUJI TEMPLE" | |

RESOLUTION:480, PROGRESSIVE, ASPECT RATIO 4:3, FONT:SMALL

FIG. 16

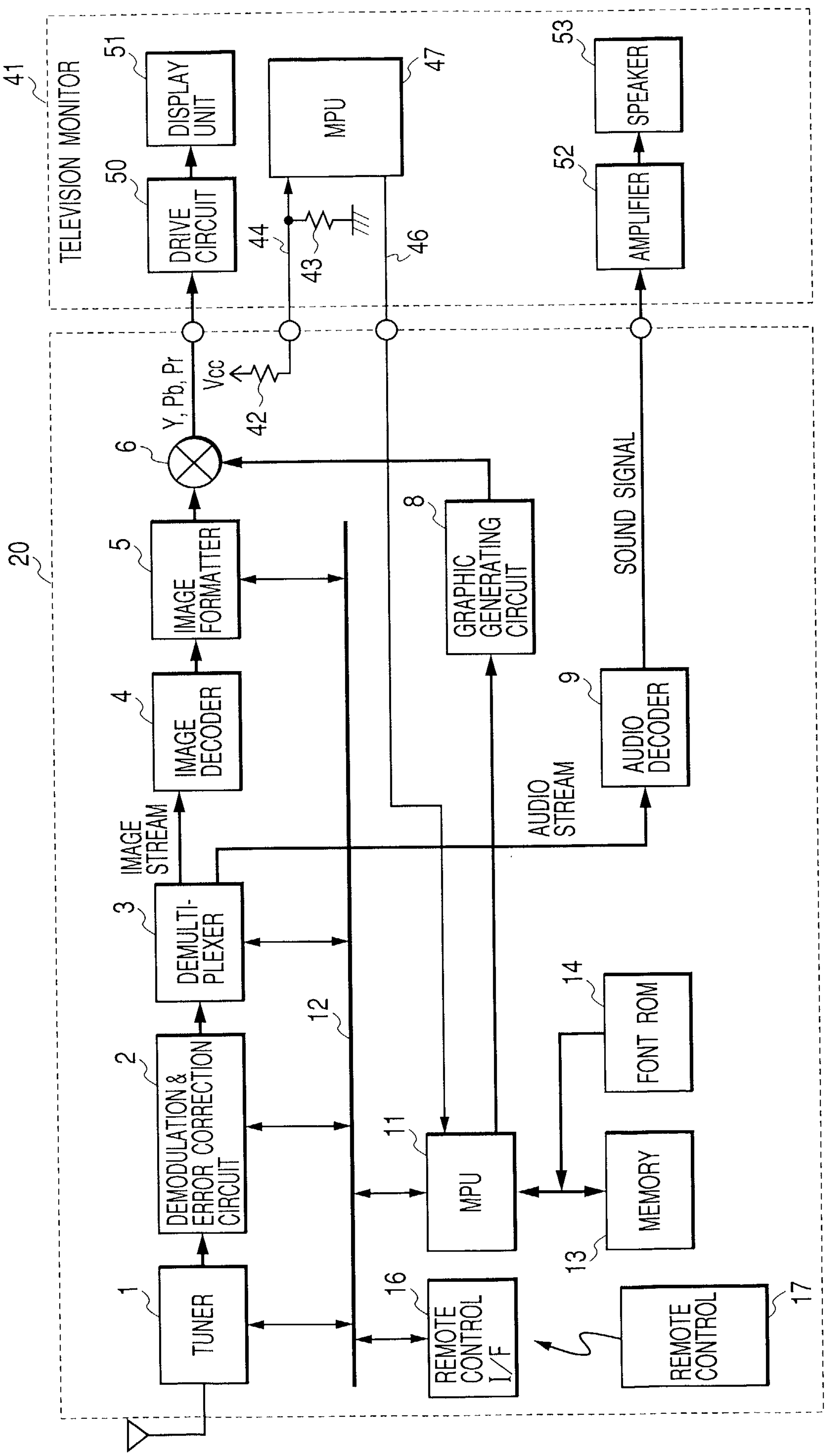
20
41
TELEVISION MONITOR
TUNER
DEMODULATION & ERROR CORRECTION CIRCUIT
DEMULTI-PLEXER
IMAGE STREAM
IMAGE DECODER
IMAGE FORMATTER
Y, Pb, Pr
Vcc
GRAPHIC GENERATING CIRCUIT
AUDIO STREAM
AUDIO DECODER
SOUND SIGNAL
MPU
MEMORY
FONT ROM
REMOTE CONTROL I/F
REMOTE CONTROL
DRIVE CIRCUIT
DISPLAY UNIT
MPU
AMPLIFIER
SPEAKER
1
2
3
4
5
6
8
9
11
12
13
14
16
17
42
43
44
46
47
50
51
52
53

FIG. 17

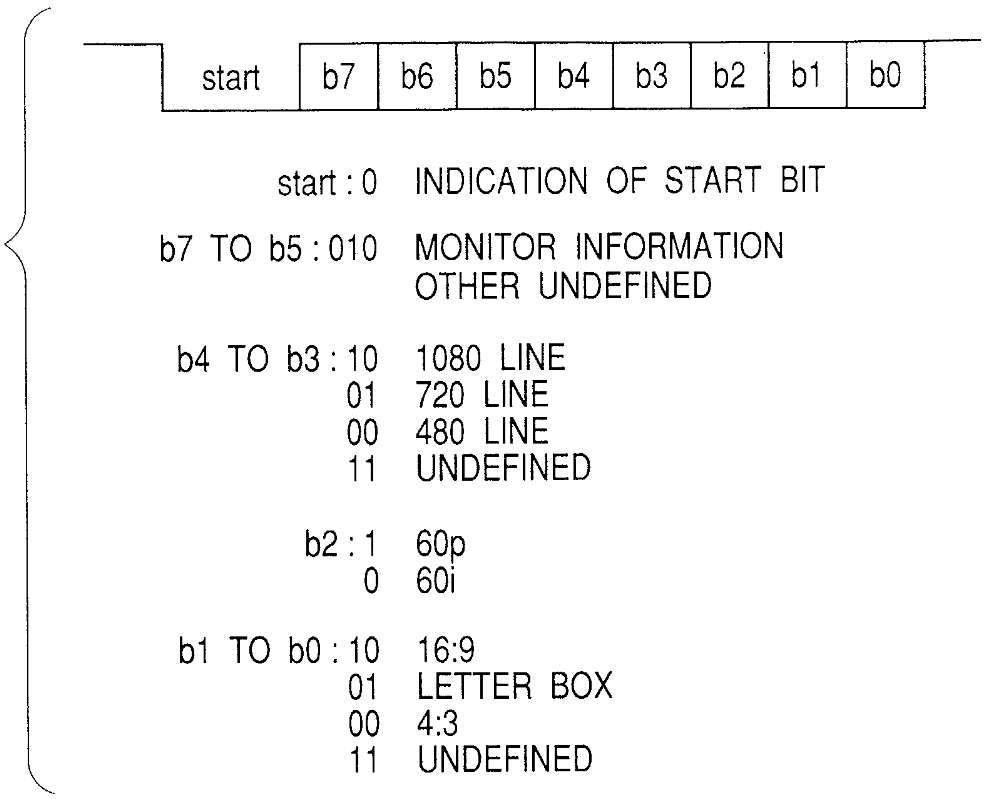
start
b7
b6
b5
b4
b3
b2
b1
b0
start : 0 INDICATION OF START BIT
b7 TO b5 : 010 MONITOR INFORMATION
OTHER UNDEFINED
b4 TO b3 : 10 1080 LINE
01 720 LINE
00 480 LINE
11 UNDEFINED
b2 : 1 60p
0 60i
b1 TO b0 : 10 16:9
01 LETTER BOX
00 4:3
11 UNDEFINED

FIG. 18

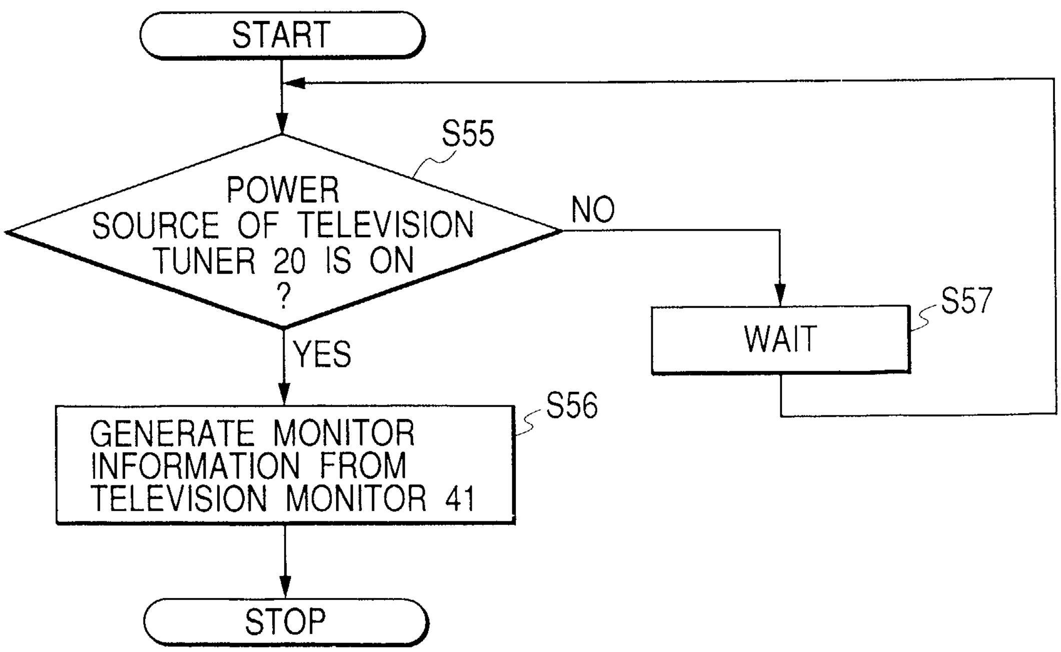
START
S55
POWER SOURCE OF TELEVISION TUNER 20 IS ON ?
NO
YES
WAIT
S57
GENERATE MONITOR INFORMATION FROM TELEVISION MONITOR 41
S56
STOP